# EUROPEAN PATENT SPECIFICATION

(11) **EP 1 029 755 B1**
(45) Date of publication and mention of the grant of the patent: **18.05.2005**
(21) Application number: 00400325.7
(22) Date of filing: 04.02.2000
(51) Int. Cl.: B60R 25/02

(54) **Arrangement for electrically locking the steering shaft of a steering device**
Anordnung zur elektrischen Verriegelung der Lenksäule einer Lenkvorrichtung
Dispositif de verrouillage électrique de l'arbre de direction d'un dispositif de direction

(30) Priority: 15.02.1999 DE 19906268
(43) Date of publication of application: 23.08.2000
(73) Proprietor: Valeo Sicherheitssysteme GmbH, 85253 Erdweg (DE)
(72) Inventor: Frick, Alexander, 86153 Augsburg (DE); Pieh, Mario, 97340 Marktbreit (DE); Berger, Andreas, 85238 Petershausen (DE); Engelmann, Joachim, 40878 Ratingen (DE); Lieb, Kurt, 63500 Seligenstadt (DE); Quellmalz, Thomas, 64291 Darmstadt (DE); Friedrich, Hagen, 85229 Mkt. Indersdorf (DE); Starken, Harald, 85253 Erdweg (DE)
(74) Representative: Lenne, Laurence

(56) References cited:
- EP-A- 0 844 154
- DE-C- 3 739 172
- DE-C- 4 422 467

## Description

The invention relates to an arrangement for electrically locking the steering shaft of a steering device of a motor vehicle.

An arrangement of this nature is known, for example, from DE 197 19 343 C1. This known arrangement comprises an electric motor which is arranged in a housing and has an actuator connected downstream for displacing a blocking element from its locked position into its unlocked position and vice versa, the blocking element, in its locked position, engaging in the recess, formed by adjacent teeth, in a toothed ring which is attached to the steering shaft and thus blocking the steering shaft. In the known arrangement, a cam drive is used as the actuator for displacing the blocking element.

A drawback of this known arrangement is that the use of the cam drive involves relatively long locking and unlocking times.

DE 37 39 172 C1 has also disclosed an arrangement for displacing a blocking element, in which an electric motor (not shown in detail) drives a worm wheel which engages in the teeth of the blocking element, which is partly designed as a rack.

One of the drawbacks of this arrangement is that a relatively powerful electric motor is required for the necessary displacement of the blocking element, and this requires a correspondingly large structural space.

EP 844 154 A discloses a further arrangement for locking a steering shaft, corresponding to the preamble of claim 1.

The invention is based on the object of providing an arrangement of the type described in the introduction with which, on the one hand, it is possible to achieve short unlocking times for the blocking element and which, on the other hand, is of very space-saving design.

According to the invention, this object is achieved by means of the features of claim 1. Further, particularly advantageous configurations of the invention are disclosed in the subclaims.

The invention is fundamentally based on the principle of using a spindle drive as the actuator, with a driver with internal screw thread arranged on the threaded spindle, which driver can be displaced in linear fashion, engages in the screw thread of the threaded spindle and, on its side which is remote from the threaded spindle, has a seat for the blocking element. Moreover, to guide the blocking element, the arrangement comprises an adapter part which is connected to the housing and can likewise be connected to the steering device. The adapter part is designed in such a manner that, in the event of the steering shaft being twisted violently in the locked position of the blocking element, it absorbs the forces acting on this element, thus reliably preventing damage to the spindle drive and the electric motor.

In order to move the locking mechanism into defined limit positions, limit stops for the driver or the blocking element are provided. For this purpose, the drive provided by the electric motor is activated for a longer time than is required for the unlocking or locking operation. After this time, the electric motor is switched off by means of an electronic switching arrangement, so that - in contrast to known arrangements - there is no need for limit-position sensors.

To avoid excessive loads being imposed on components when the driver reaches the limit positions, the threaded spindle is advantageously supported against the housing of the arrangement according to the invention elastically in the axial direction by means of springs, preferably cup springs. When the movement of the driver is blocked in the limit positions, the threaded spindle can rotate still further, thus compressing the cup springs. As a result, the excess force generated by the mass moments of inertia of the mechanism is reduced and it is possible to dispense with space-consuming slipping clutches or long threaded spindles with a torsion bar action.

In a further advantageous embodiment of the invention, the blocking element is provided with a lateral recess, into which a securing lever can be pivoted by means of a preloaded spring in order for the blocking element to be fixed in the unlocked position. For the blocking element to be displaced from the unlocked position into the locked position, the securing lever is firstly pivoted out of the recess by means of a second electric motor or by means of a shaft which is activated by the threaded spindle.

Preferably, the adapter part is arranged exchangeably on the housing and the blocking element is arranged on the seat of the driver, so that the arrangement according to the invention can easily be adapted to the steering devices of different vehicle manufacturers simply by changing these parts.

It has proven advantageous if the blocking element, as seen in the direction of the longitudinal axis of the steering shaft, comprises two spring-loaded blocking pins which are arranged one behind the other. This is because if a blocking element with only one blocking pin is used, this pin, when it is being displaced into the locked position, often strikes a tooth of the toothed ring arranged on the steering shaft, so that the steering shaft has to be rotated further in order for it to be locked, whereas using two blocking pins ensures that one of the two blocking pins always engages in the recesses in a toothed ring which are defined by adjacent teeth. If the blocking bolts are arranged one behind the other in the axial direction of the steering shaft, however, each blocking bolt must be assigned its own toothed ring (or toothed ring area), in which case the two toothed rings (or toothed ring areas) are then offset with respect to one another on the steering shaft.

Further details and advantages of the invention will emerge from the following exemplary embodiments explained with reference to figures, in which:
- Fig. 1: shows a longitudinal section through an arrangement according to the invention with a blocking element which can be displaced by means of a spindle drive and is in its unlocked position;
- Fig. 2: shows a view corresponding to Fig. 1, with the blocking element fixed in its unlocked position by a spring-loaded, pivotable securing lever which can be pivoted by means of an electric motor;
- Fig. 3: shows a view corresponding to Fig. 2, in which the spring-loaded securing lever can be pivoted by means of a shaft which is connected to the drive of the blocking element;
- Fig. 4: shows a perspective view of a further exemplary embodiment of the invention, in which the blocking element comprises two blocking pins which are arranged one behind the other;
- Fig. 5: shows a side view of the connecting area between the spindle drive and the blocking element used in Fig. 4.

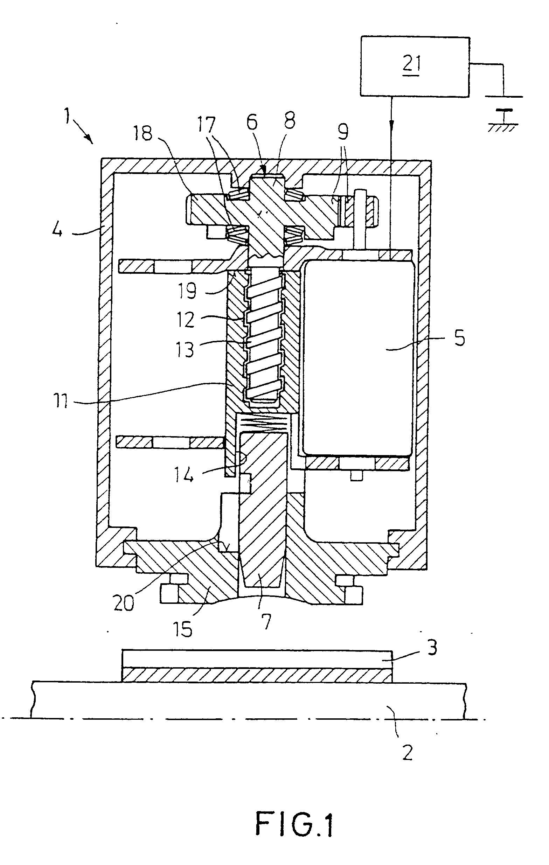

In Fig. 1, 1 denotes an arrangement according to the invention for electrically locking a steering shaft, denoted by 2, of a motor vehicle, having a toothed ring 3.

The arrangement 1 comprises a housing 4 and a first electric motor 5 which is arranged in the housing and has a spindle drive 6 connected downstream. This drive displaces a spring-loaded blocking element 7 from the unlocked position shown in Fig. 1 into a locked position (not shown) in which the blocking element 7 engages in the recess formed by adjacent teeth of the toothed ring 3.

The spindle drive 6 comprises a threaded spindle 8, which is driven by means of a toothed transmission 9 of the first electric motor 5, and a driver 11, which is mounted in a guide and has an internal screw thread 12 which engages in the screw thread 13 of the threaded spindle 8. On its side facing toward the blocking element 7, the driver 11 has a seat 14, via which the blocking element 7, on its side which is remote from the steering shaft 2, is connected to the driver 11.

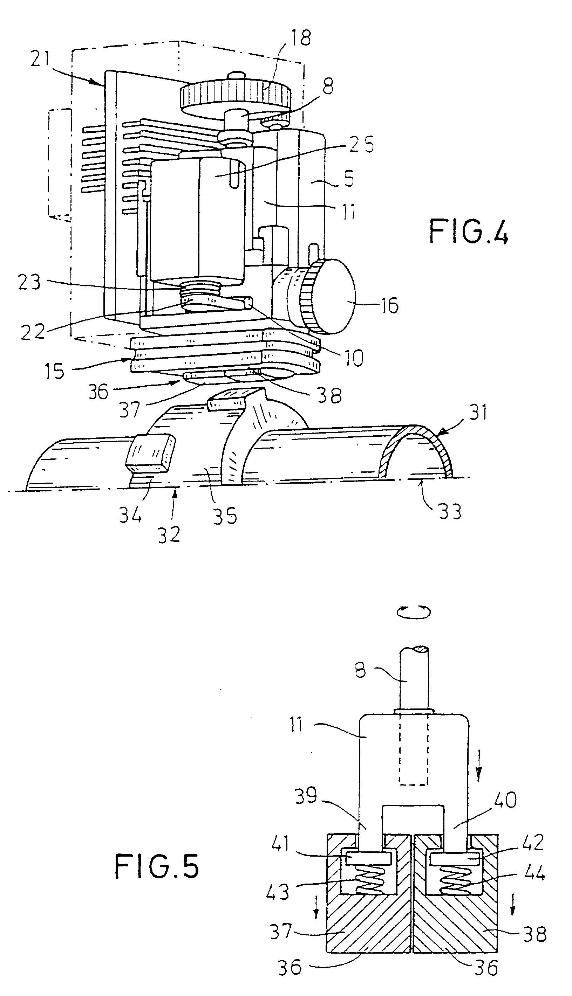

Moreover, to guide the blocking element 7, the arrangement 1 according to the invention comprises an adapter part 15, which can be connected to the housing 4 and the steering device of the vehicle and by means of which the arrangement 1 is attached to the steering device. The adapter part 15 is designed in such a manner that, in the event the steering shaft 2 being twisted violently in the locked position of the blocking element 7, it absorbs the forces acting on the latter. The adapter part 15 is attached to the steering device by means of a screw 16, for example (cf. also Fig. 4).

On its side which is remote from the driver 11, the threaded spindle 8 is supported against the housing 4 elastically in the axial direction by means of cup springs 17, which are arranged on either side of a gearwheel 18, attached to the threaded spindle 8, of the toothed transmission 9, in such a manner that the threaded spindle 8 rotates still further counter to the pressure of the cup springs 17 (and correspondingly moves in the axial direction) when the driver 11 has already reached its limit position and is blocked by a corresponding limit stop 19, 20.

The arrangement 1 is furthermore connected to an electronic switching arrangement 21 which generates the control signals for the first electric motor 5 and is designed in such a manner that, after the electric motor 5 has been activated, the motor is switched off automatically after a predeterminable time, this time being selected to be longer than would be necessary for the unlocking or locking operation.

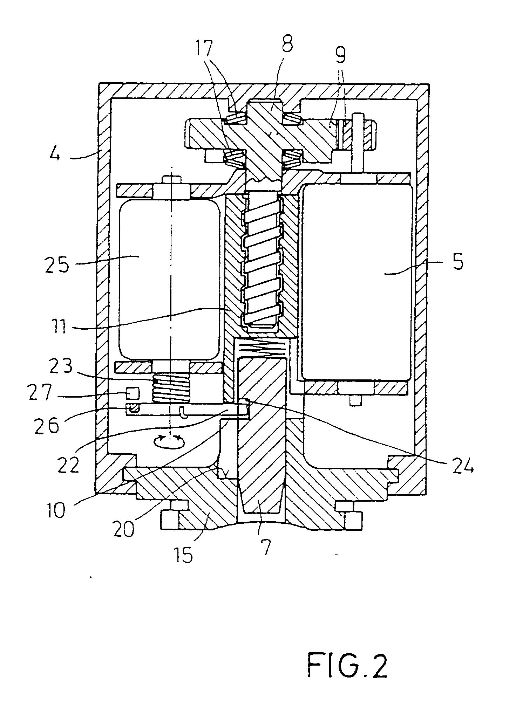

Fig. 2 again shows the arrangement 1 illustrated in Fig. 1, but in this case, in order for the blocking element 7 to be additionally fixed in the unlocked position, a securing lever 22 is provided, which is arranged so that it can be pivoted into a recess 24 in the blocking element 7 through a recess 10 in the adapter part 15 by means of a preloaded torsion spring 23. In order for it subsequently to be possible for the blocking element 7 to be displaced out of the unlocked position into the locked position, firstly the securing lever 22 is pivoted back out of the recess 24 by means of a second electric motor 25, and then it is displaced with the aid of the spindle drive 6 (Fig. 1), in which case the second electric motor can also be activated by means of the electronic switching arrangement 21 illustrated in Fig. 1.

In order for it to be possible to detect the position of the securing lever 22, a magnet 26 is arranged on the latter and a magnetic field sensor 27 (e.g. a Hall sensor) is arranged in its vicinity inside the housing 4, which sensor responds as soon as the blocking element 7 is in its unlocked position.

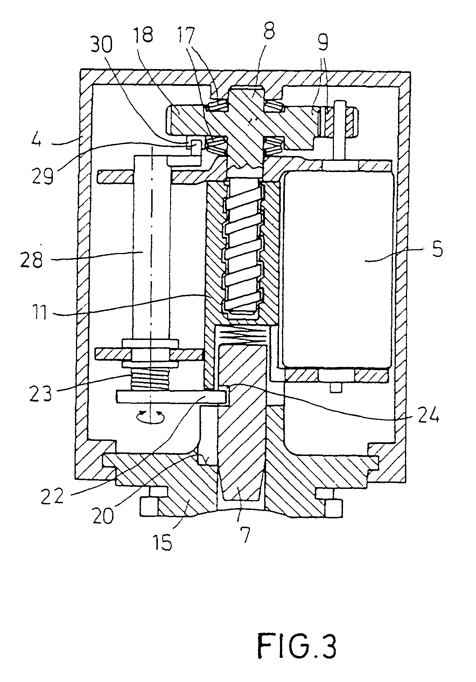

In the exemplary embodiment illustrated in Fig. 3, the securing lever 22 which is required in order to fix the blocking element 7 is mechanically pivoted out of the recess 24 in the blocking element 7 by means of a shaft 28. The shaft 28 is activated by the thread spindle and, for this purpose, has, on its side which is remote from the securing lever 22, a control projection 29 which is supported on a control cam 30 driven by the threaded spindle 8.

Naturally, the invention is not limited to the exemplary embodiments described above. For example, the securing lever may also engage in a suitable recess in the driver in order for the blocking element to be fixed in its unlocked position.

Furthermore, the limit stops of the driver may be replaced by limit stops for the blocking element, in which case the limit stop in the locked position of the blocking element is defined, for example, by the blocking element coming into contact with the steering shaft.

The blocking element may also, for example, comprise two blocking pins which are arranged one behind the other in the direction of the longitudinal axis of the steering shaft. Fig. 4 and 5 show a corresponding exemplary embodiment. These figures show an arrangement substantially as illustrated in Fig. 2. The parts corresponding to Fig. 2 are therefore provided with the same reference numerals in Fig. 4.

In Fig. 4, the reference numeral 31 denotes a steering shaft on which a toothed ring 32 is arranged which, as seen in the direction of the longitudinal axis 33 of the steering shaft, has two toothed ring areas 34, 35 which, as seen in the circumferential direction, are offset with respect to one another.

The locking element 36 of the arrangement according to the invention comprises two spring-loaded blocking pins 37, 38 which are arranged one behind the other and, in their locked position, each engage in an associated toothed ring area 34, 35.

To connect to the blocking element 36, the driver 11 is of U-shaped design at its bottom end (Fig. 5), the two limbs 39, 40 each having a holding strip 41, 42 in such a manner that the blocking pins 37, 38 engage around the top side of the holding strips 41, 42 of the driver. This design of the seat ensures that both blocking pins 37, 38 of the blocking element 36 are held securely in the seat. The blocking pins 37, 38 of the blocking element 36 are mounted resiliently in the axial direction in the seat of the driver 11, by way of two compression springs 43, 44.

### List of reference numerals

- 1: Arrangement
- 2: Steering shaft
- 3: Toothed ring
- 4: Housing
- 5: First electric motor
- 6: Spindle drive, actuator
- 7: Blocking element
- 8: Threaded spindle
- 9: Toothed transmission
- 10: Recess (adapter part)
- 11: Driver
- 12: Internal screw thread
- 13: Screw thread (threaded spindle)
- 14: Seat
- 15: Adapter part
- 16: Screw
- 17: Cup springs
- 18: Gear wheel
- 19, 20: Limit stops
- 21: Electronic switching arrangement
- 22: Securing lever
- 23: Torsion spring, spring
- 24: Recess
- 25: Second electric motor; device
- 26: Magnet
- 27: Sensor, magnetic field sensor, Hall sensor
- 28: Shaft, device
- 29: Control projection
- 30: Control cam
- 31: Steering shaft
- 32: Toothed ring
- 33: Longitudinal axis
- 34, 35: Toothed ring areas
- 36: Blocking element
- 37, 38: Blocking pins
- 39, 40: Limbs
- 41, 42: Holding bars
- 43, 44: Springs

## Claims

1. An arrangement for electrically locking the steering shaft (2; 31) of a steering device of a motor vehicle, having the following features:
a) the arrangement (1) comprises a housing (4) and a first electric motor (5) which is arranged in the housing and has an actuator (6) connected downstream for displacing a blocking element (7; 36) which is arranged so that it can be displaced from its unlocked position into a locked position;
b) the actuator (6) comprises a driver (11), which can be displaced in linear fashion in a guide;
c) on its side facing toward the blocking element (7; 36) the driver (11) has a seat (14) via which the blocking element (7;36), on its side which is remote from the steering shaft (2; 31) can be connected to the driver (11),
d) to guide the blocking element (7; 36), the arrangement (1) comprises an adapter part (15) which can be connected to the steering device of the vehicle and is designed in such a manner that if the steering shaft (2; 31) is twisted violently in the locked position of the blocking element (7; 36) it absorbs the forces acting on this part;
**characterised in that** the actuator further comprises a spindle drive having a threaded spindle (8) which is connected via a toothed transmission (9) and the driver has an internal screw thread (12) which engages in the screw thread (13) of the threaded spindle (8).

2. The arrangement as claimed in claim 1, wherein the threaded spindle (8) is supported against the housing (4) elastically in the axial direction by means of springs (17) so that the threaded spindle (8), when the driver (11) has already reached its limit position and is blocked by a limit stop (19; 20), can rotate still further counter to the pressure of one of the springs (17).

3. The arrangement as claimed in claim 2, wherein the threaded spindle (8) on its side which is remote from the driver (11), is supported against the housing (4) elastically, in the axial direction, by means of cup springs (17) which are arranged on either side of a gearwheel (18) which is attached to the threaded spindle (8).

4. The arrangement as claimed in one of claims 1 to 3, which is connected to an electronic switching arrangement (21) which generates the control signals for the first electric motor (5) and is designed in such a manner that, after the electric motor (5) has been activated, the motor is automatically switched off after a predeterminable time, this time being selected to be longer than would be required for the unlocking or locking operation.

5. The arrangement as claimed in one of claims 1 to 4, wherein the blocking element (7; 36) or the driver (11) includes a lateral recess (24) wherein the arrangement (1) comprises a pivotable securing lever (22), which is arranged in the housing (4) and is preloaded by a spring (23) in such a manner that the spring (23) in the unlocked position of the blocking element (7; 36) pivots the securing lever (22) into the recess (24) and fixes the blocking element (7; 36) in this position, and wherein a device (25; 28) is provided, by means of which the securing lever (22) can be pivoted out of the recess (24) counter to the pressure of the spring (23) before the blocking element (7; 36) is displaced into its locked position.

6. The arrangement as claimed in claim 5, wherein the device (25) for pivoting the securing lever (22) out of the recess (24) in the blocking element (7; 36) is a second electric motor, which is likewise activated by the electronic switching arrangement (21).

7. The arrangement as claimed in claim 5, wherein the device (28) for pivoting the securing lever (22) out of the recess (24) in the blocking element (7; 36) is a shaft (28) which is connected to the securing lever (22) extends in the axial direction of the threaded spindle (8) and, on its side which is remote from the securing lever (22) bears a control projection (29) which is supported on a control cam (30) which is driven by the threaded spindle (8).

8. The arrangement as claimed in one of claims 5 to 7, wherein the securing lever (22) is arranged to the side of the adapter part (15) and wherein a slot-like recess (10) is provided in the side wall of the adapter part (15) through which recess the securing lever (22) can be pivoted, SO that it engages in the recess (24) in the blocking element (7; 36) in the unlocked position of the blocking element (7; 36).

9. The arrangement as claimed in one of claims 5 to 8, wherein at least one sensor (27) is arranged in the housing (4) of the arrangement (1) in order to monitor the position of the securing lever (22).

10. The arrangement as claimed in claim 9, wherein the sensor (27) is a Hall sensor.

11. The arrangement as claimed in one of claims 1 to 10, wherein the adapter part (15) is arranged exchangeably on the housing (4) of the arrangement (1).

12. The arrangement as claimed in one of claims 1 to 11, wherein the blocking element (36) as seen in the direction of the longitudinal axis (33) of the steering shaft (31) comprises two spring-loaded blocking pins (37, 38) which are arranged one behind the other.

## Patentansprüche

1. Vorrichtung zur elektrischen Verriegelung der Lenkspindel (2;31) einer Lenkeinrichtung eines Kraftfahrzeuges mit den Merkmalen:
a) die Vorrichtung (1) umfaßt ein Gehäuse (4) sowie einen in dem Gehäuse angeordneten ersten Elektromotor (5) mit nachgeschaltetem Stellantrieb (6) zur Verschiebung eines von seiner Ent- in eine Verriegelungsstellung verschiebbar angeordneten Sperrelementes (7;36);
b) der Stellantrieb (6) umfaßt einen in einer Führung linear verschiebbar gelagerten Mitnehmer (11);
c) der Mitnehmer (11) weist auf seiner dem Sperrelement (7;36) zugewandten Seite eine Aufnahme (14) auf, über die das Sperrelement (7;36) auf seiner der Lenkspindel (2;31) abgewandten Seite mit dem Mitnehmer (11) verbindbar ist;
d) die Vorrichtung (1) umfaßt zur Führung des Sperrelementes (7;36) ein mit der Lenkeinrichtung des Fahrzeuges verbindbares Adapterteil (15), welches derart ausgebildet ist, daß es bei einer gewaltsamen Verdrehung der Lenkspindel (2;31) im verriegelten Zustand des Sperrelementes (7;36) die auf dieses Teil einwirkende Kräfte aufnimmt;
**dadurch gekennzeichnet, daß** der Stellantrieb (6) außerdem einen Spindelantrieb mit einer über ein Zahnradgetriebe (9) verbundenen Gewindespindel (8) umfaßt, und daß der Mitnehmer ein Innengewinde (12) aufweist, welches in das Gewinde (13) der Gewindespindel (8) eingreift.

2. Vorrichtung nach Anspruch 1, **dadurch gekennzeichnet, daß** die Gewindespindel (8) axial elastisch über Federn (17) gegen das Gehäuse (4) abgestützt ist, so daß die Gewindespindel (8) sich gegen den Druck einer der Federn (17) noch weiter drehen kann, wenn der Mitnehmer (11) bereits seine Endlage erreicht hat und durch einen Endanschlag (19;20) blockiert ist.

3. Vorrichtung nach Anspruch 2, **dadurch gekennzeichnet, daß** die Gewindespindel (8) auf ihrer dem Mitnehmer (11) abgewandten Seite axial elastisch über Tellerfedern (17) gegen das Gehäuse (4) abgestützt ist, die beidseitig an einem mit der Gewindespindel (8) befestigten Zahnrad (18) angeordnet sind.

4. Vorrichtung nach einem der Ansprüche 1 bis 3, **dadurch gekennzeichnet, daß** die Vorrichtung (1) mit einer elektronischen Schaltungsvorrichtung (21) verbunden ist, welche die Steuersignale für den ersten Elektromotor (5) erzeugt, und die derart ausgelegt ist, daß nach Aktivierung des Elektromotors (5) ein Abschalten des Motors automatisch nach einem vorgebbaren Zeitraum erfolgt, wobei dieser Zeitraum länger gewählt ist, als es für den Ent- oder Verriegelungsvorgang erforderlich wäre.

5. Vorrichtung nach einem der Ansprüche 1 bis 4, **dadurch gekennzeichnet, daß** das Sperrelement (7;36) oder der Mitnehmer (11) seitlich eine Ausnehmung (24) enthält, daß die Vorrichtung (1) einen in dem Gehäuse (4) angeordneten, durch eine Feder (23) vorgespannten schwenkbaren Sicherungshebel (22) umfaßt, derart, daß die Feder (23) den Sicherungshebel (22) in der Entriegelungsstellung des Sperrelementes (7;36) in die Ausnehmung (24) verschwenkt und das Sperrelement (7;36) in dieser Stellung fixiert, und daß eine Einrichtung (25;28) vorgesehen ist, mittels welcher der Sicherungshebel (22) gegen den Druck der Feder (23) vor dem Verschieben des Sperrelementes (7;36) in seine Verriegelungsstellung aus der Ausnehmung (24) herausschwenkbar ist.

6. Vorrichtung nach Anspruch 5, **dadurch gekennzeichnet, daß** es sich bei der Einrichtung (25) zum Verschwenken des Sicherungshebels (22) aus der Ausnehmung (24) des Sperrelementes (7;36) um einen zweiten Elektromotor handelt, der ebenfalls durch die elektronische Schaltungsvorrichtung (21) angesteuert wird.

7. Vorrichtung nach Anspruch 5, **dadurch gekennzeichnet, daß** es sich bei der Einrichtung (28) zum Verschwenken des Sicherungshebels (22) aus der Ausnehmung (24) des Sperrelementes (7;36) um eine mit dem Sicherungshebel (22) verbundene, sich in axialer Richtung der Gewindespindel (8) erstreckende Welle (28) handelt, die auf ihrer dem Sicherungshebel (22) abgewandten Seite einen Steuernocken (29) trägt, welcher sich an einer von der Gewindespindel (8) angetriebenen Steuerkurve (30) abstützt.

8. Vorrichtung nach einem der Ansprüche 5 bis 7, **dadurch gekennzeichnet, daß** der Sicherungshebel (22) seitlich von dem Adapterteil (15) angeordnet ist, und daß in der Seitenwand des Adapterteiles (15) eine schlitzförmige Ausnehmung (10) vorgesehen ist, durch welche der Sicherungshebel (22) hindurchschwenkbar ist, so daß er in der Entriegelungsstellung des Sperrelementes (7;36) in die Ausnehmung (24) des Sperrelementes (7;36) eingreift.

9. Vorrichtung nach einem der Ansprüche 5 bis 8, **dadurch gekennzeichnet, daß** in dem Gehäuse (4) der Vorrichtung (1) zur Überwachung der Lage des Sicherungshebels (22) mindestens ein Sensor (27) angeordnet ist.

10. Vorrichtung nach Anspruch 9, **dadurch gekennzeichnet, daß** es sich bei dem Sensor (27) um einen Hallsensor handelt.

11. Vorrichtung nach einem der Ansprüche 1 bis 10, **dadurch gekennzeichnet, daß** das Adapterteil (15) austauschbar an dem Gehäuse (4) der Vorrichtung (1) angeordnet ist.

12. Vorrichtung nach einem der Ansprüche 1 bis 11, **dadurch gekennzeichnet, daß** das Sperrelement (36), in Richtung der Längsachse (33) der Lenkspindel (31) gesehen, aus zwei hintereinander angeordneten federbeaufschlagten Sperrbolzen (37,38) besteht.

## Revendications

1. Système de verrouillage électrique de la colonne de direction (2 ; 31) d'un dispositif de direction d'un véhicule motorisé, possédant les caractéristiques suivantes :
a) le système (1) est constitué d'un carter (4) et d'un premier moteur électrique (5) disposé dans le carter et possédant un vérin (6) relié en aval pour le déplacement d'un élément de blocage (7 ; 36) disposé de manière à pouvoir être déplacé de sa position déverrouillée à une position verrouillée ;
b) le vérin (6) comprend un système d'entraînement (11) qui peut être déplacé de manière linéaire dans un système de guidage ;
c) sur son côté faisant face à l'élément de blocage (7 ; 36) le système d'entraînement (11) possède un siège (14) par lequel l'élément de blocage (7 ; 36), sur son côté éloigné de la colonne de direction (2 ; 31) peut être relié au système d'entraînement (11 ),
d) pour guider l'élément de blocage (7 ; 36), le système (1) est constitué d'une pièce d'adaptation (15) qui peut être reliée au dispositif de direction du véhicule et est conçue de telle manière qu'en cas de torsion violente de la colonne de direction (2 ; 31) dans la position verrouillée de l'élément de blocage (7 ; 36), elle puisse absorber les forces agissant sur cette pièce ;
**caractérisé en ce que** le vérin comprend également une commande de broche possédant une broche filetée (8) reliée par une transmission dentée (9) et le système d'entraînement possède un filetage intérieur (12) s'engageant dans le filetage de vis (13) de la broche filetée (8).

2. Système selon la revendication 1, dans lequel la broche filetée (8) s'appuie contre le carter (4) de manière élastique dans le sens axial au moyen de ressorts (17) de manière à ce que la broche filetée (8), lorsque le système d'entraînement (11) a déjà atteint sa fin de course et est bloqué par une butée de fin de course (19 ; 20), puisse toujours continuer à tourner contre la pression d'un des ressorts (17).

3. Système selon la revendication 2, dans lequel la broche filetée (8) sur son côté éloigné du système d'entraînement (11), s'appuie contre le carter (4) de manière élastique, dans le sens axial, au moyen de ressorts Belleville (17) disposés de chaque côté d'une roue d'engrenage (18) reliée à la broche filetée (8).

4. Système selon l'une quelconque des revendications 1 à 3, relié à un système de commutation électronique (21) qui génère les signaux de commande pour le premier moteur électrique (5) et est conçu de telle sorte que, après l'activation du moteur électrique (5), le moteur est automatiquement désactivé après un délai prédéfinissable, ce délai étant sélectionné pour être plus long que le délai qui serait requis pour l'opération de déverrouillage ou de verrouillage.

5. Système selon l'une quelconque des revendications 1 à 4, dans lequel l'élément de blocage (7; 36) ou le système d'entraînement (11) comprend une cavité latérale (24) dans laquelle le système (1) comprend un levier de fixation rotatif (22), disposé dans le carter (4) et précontraint par un ressort (23) de manière à ce que le ressort (23) dans la position déverrouillée de l'élément de blocage (7 ; 36) fasse pivoter le levier de fixation (22) dans la cavité (24) et fixe l'élément de blocage (7 ; 36) dans cette position, et dans lequel un dispositif (25 ; 28) est prévu, au moyen duquel le levier de fixation (22) peut être extrait en pivotant de la cavité (24) contre la pression du ressort (23) avant que l'élément de blocage (7 ; 36) ne soit déplacé en position verrouillée.

6. Système selon la revendication 5, dans lequel le dispositif (25) de rotation du levier de fixation (22) en dehors de la cavité (24) de l'élément de blocage (7 ; 36) est un second moteur électrique, qui est également activé par le système de commutation électronique (21).

7. Système selon la revendication 5, dans lequel le dispositif (28) de rotation du levier de fixation (22) en dehors de la cavité (24) de l'élément de blocage (7 ; 36) est un arbre (28) relié au levier de fixation (22) qui s'étend dans le sens axial de la broche filetée (8) et, sur son côté éloigné du levier de fixation (22) porte une saillie de commande (29) soutenue par une came de commande (30) entraînée par la broche filetée (8).

8. Système selon l'une quelconque des revendications 5 à 7, dans lequel le levier de fixation (22) est disposé sur le côté de la pièce d'adaptation (15) et dans lequel une cavité en forme de fente (10) est prévue dans la paroi latérale de la pièce d'adaptation (15), le levier de fixation (22) pouvant pivoter à travers ladite cavité, de manière à pouvoir s'engager dans la cavité (24) de l'élément de blocage (7 ; 36) dans la position déverrouillée de l'élément de blocage (7 ; 36).

9. Système selon l'une quelconque des revendications 5 à 8, dans lequel au moins un capteur (27) est installé dans le carter (4) du système (1) de manière à contrôler la position du levier de fixation (22).

10. Système selon la revendication 9, dans lequel le capteur (27) est un capteur à effet Hall.

11. Système selon l'une quelconque des revendications 1 à 10, dans lequel la pièce d'adaptation (15) est disposée de façon à pouvoir être échangée sur le carter (4) du système (1).

12. Système selon l'une quelconque des revendications 1 à 11, dans lequel l'élément de blocage (36) vu dans le sens de l'axe longitudinal (33) de la colonne de direction (31) est constitué de deux axes de blocage sur ressort (37, 38) disposés l'un derrière l'autre.
